(19) Europäisches Patentamt
European Patent Office
Office européen des brevets

(11) EP 4 648 168 A1

(12) EUROPEAN PATENT APPLICATION
published in accordance with Art. 153(4) EPC

(43) Date of publication:
12.11.2025 Bulletin 2025/46

(21) Application number: 23936055.5

(22) Date of filing: 10.05.2023

(51) International Patent Classification (IPC):
$H01M\ 10/058^{(2010.01)}$ $H01M\ 4/139^{(2010.01)}$

(52) Cooperative Patent Classification (CPC):
Y02E 60/10

(86) International application number:
PCT/CN2023/093164

(87) International publication number:
WO 2024/229731 (14.11.2024 Gazette 2024/46)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Contemporary Amperex Technology
Co., Limited
Ningde, Fujian 352100 (CN)

(72) Inventors:
• CHEN, Xingbu
  Ningde, Fujian 352100 (CN)
• YIN, Ziyi
  Ningde, Fujian 352100 (CN)

• DONG, Miaomiao
  Ningde, Fujian 352100 (CN)
• LING, Yangfang
  Ningde, Fujian 352100 (CN)
• WU, Lili
  Ningde, Fujian 352100 (CN)
• SONG, Peidong
  Ningde, Fujian 352100 (CN)
• SUN, Xin
  Ningde, Fujian 352100 (CN)

(74) Representative: Ziebig Hengelhaupt Intellectual
Property Attorneys
Patentanwaltskanzlei PartGmbB
Leipziger Straße 49
10117 Berlin (DE)

(54) **SECONDARY BATTERY AND ELECTRIC DEVICE**

(57)    A secondary battery is provided, including: a positive electrode plate, where the positive electrode plate has a positive electrode active material, the positive electrode active material includes $Li_aNi_xCo_yM_zO_2$, where $0.2≤a≤1.2$, $0.85≤x≤1$, $0≤y<0.15$, and $x+y+z=1$, and M includes one or more of Mn and Al; and a coating weight of the positive electrode active material is 19 mg/cm$^2$ to 45 mg/cm$^2$, and a compacted density is 3.2 g/cm$^3$ to 3.8 g/cm$^3$; a negative electrode plate, where the negative electrode plate has a negative electrode active material, where a mass percentage of a silicon-based material in the negative electrode active material is 20% to 100%, a coating weight of the negative electrode active material is 5 mg/cm$^2$ to 13 mg/cm$^2$, and a compacted density is 1.1 g/cm$^3$ to 1.9 g/cm$^3$; and an electrolyte, where an amount of the electrolyte is 0.8 g/Ah to 1.5 g/Ah, the electrolyte includes an electrolytic solution, and an amount of the electrolytic solution outside a bare cell in the secondary battery is less than or equal to 0.1 g/Ah. A corresponding electric apparatus is further provided.

FIG. 2

EP 4 648 168 A1

# EP 4 648 168 A1

## Description

### TECHNICAL FIELD

This application relates to the field of secondary battery technologies, and in particular, to a secondary battery, a preparation method thereof, and an electric apparatus.

### BACKGROUND

In recent years, as application of secondary batteries becomes increasingly broad, secondary batteries have been widely applied in energy storage power systems such as hydropower, thermal power, wind power, and solar power plants, and in various fields including electric tools, electric bicycles, electric motorcycles, and electric vehicles.

Due to significant advancements in secondary batteries, higher requirements have been imposed on energy density of secondary batteries. Therefore, seeking a secondary battery with a high energy density has become one of the key directions focused by persons skilled in the art.

### SUMMARY

This application is made in view of the above issues, and one of objectives is to provide a secondary battery having a high energy density.

To achieve the above objective, a first aspect of this application provides a secondary battery, including:

a positive electrode plate, where the positive electrode plate has a positive electrode active material, the positive electrode active material includes $Li_aNi_xCo_yM_zO_2$, where $0.2 \leq a \leq 1.2$, $0.85 \leq x \leq 1$, $0 \leq y < 0.15$, and $x+y+z=1$, and M includes one or more of Mn and Al; and a coating weight of the positive electrode active material is 19 mg/cm$^2$ to 45 mg/cm$^2$, and a compacted density of the positive electrode plate is 3.2 g/cm$^3$ to 3.8 g/cm$^3$;

a negative electrode plate, where the negative electrode plate has a negative electrode active material, where a mass percentage of a silicon-based material in the negative electrode active material is 20% to 100%, a coating weight of the negative electrode active material is 5 mg/cm$^2$ to 13 mg/cm$^2$, and a compacted density of the negative electrode plate is 1.1 g/cm$^3$ to 1.9 g/cm$^3$; and

an electrolyte, where an amount of the electrolyte in the secondary battery is 0.8 g/Ah to 1.5 g/Ah, the electrolyte includes an electrolytic solution, and an amount of the electrolytic solution outside a bare cell in the secondary battery is less than or equal to 0.1 g/Ah.

In the secondary battery of this application, for the positive electrode plate and the negative electrode plate, compacted densities are high; an extremely small total amount of electrolyte is used, and an amount of the electrolytic solution outside the bare cell is minimized in the electrolyte for not contributing to capacity performance; and a high-nickel ternary positive electrode material and a high-silicon negative electrode active material are used, and a coating weight is large. Through the combination of the above technical means, the secondary battery has a high energy density.

In any embodiment, a separator is disposed between the positive electrode plate and the negative electrode plate, a surface of the separator is provided with a first high liquid-absorbent polymer layer, and an equilibrium swelling ratio of a high liquid-absorbent polymer in the first high liquid-absorbent polymer layer is 150% to 300%. In this way, a capability of electrolytic solution retention between the separator and the electrode plates can be further improved, allowing the electrolyte to be further concentrated inside the bare cell, thereby improving the energy density of the secondary battery.

In any embodiment, a surface of the positive electrode plate and/or the negative electrode plate is provided with a second high liquid-absorbent polymer layer, and an equilibrium swelling ratio of a high liquid-absorbent polymer in the second high liquid-absorbent polymer layer is 150% to 300%. In this case, the energy density of the secondary battery can be further improved.

In any embodiment, a coating weight of the high liquid-absorbent polymer is 0.1 mg/cm$^2$ to 1.4 mg/cm$^2$. In this way, requirements of the positive electrode plate and the negative electrode plate for electrolytic solution retention can be effectively satisfied.

In any embodiment, a coating weight of the high liquid-absorbent polymer is 0.1 mg/cm$^2$ to 1.0 mg/cm$^2$.

In any embodiment, the high liquid-absorbent polymer includes one or more of a polyacrylate electrolyte, a polyether electrolyte, a polycarbonate electrolyte, a polycarboxylate electrolyte, a silicon-based electrolyte, a polythiol electrolyte, a maleic anhydride electrolyte, and a polysulfate electrolyte.

In any embodiment, the electrolyte further includes a gel electrolyte, and a mass ratio of the gel electrolyte to the electrolytic solution is 1:(0.05 to 0.4). In this way, the electrolytic solution can be better retained within the bare cell, reducing extrusion of the electrolytic solution due to swelling of the high-silicon electrode plate during charge.

In any embodiment, the mass ratio of the gel electrolyte to the electrolytic solution is 1:(0.05 to 0.25).

In any embodiment, a monomer forming the gel electrolyte includes one or more of methyl methacrylate, methyl acrylate, ethyl methacrylate, ethyl acrylate, n-butyl methacrylate, butyl acrylate, n-octyl methacrylate, n-octyl acrylate, vinyl acetate, vinylene carbonate, vinyl ethylene carbonate, triethylene glycol dimethacrylate, diethylene glycol dimethacrylate, ethylene glycol dimethacrylate, allyl methacrylate, divinylbenzene, polyvinyl alcohol, and styrene.

In any embodiment, an initiator forming the gel electrolyte includes one or more of a persulfate, an azo initiator, and an organic peroxide initiator.

In any embodiment, the coating weight of the positive electrode active material is $25\,mg/cm^2$ to $35\,mg/cm^2$. In this way, the energy density of the secondary battery can be further improved.

In any embodiment, the compacted density of the positive electrode plate is $3.5\,g/cm^3$ to $3.7\,g/cm^3$. In this way, a total demand for the electrolytic solution in the positive electrode film layer can be further reduced, thereby further improving the energy density of the secondary battery.

In any embodiment, the coating weight of the negative electrode active material is $7\,mg/cm^2$ to $10.5\,mg/cm^2$. In this way, the energy density of the secondary battery can be further improved.

In any embodiment, the compacted density of the negative electrode plate is $1.6\,g/cm^3$ to $1.8\,g/cm^3$. In this way, a total demand for the electrolytic solution in the negative electrode film layer can be further reduced, thereby further improving the energy density of the secondary battery.

In any embodiment, the amount of the electrolyte in the secondary battery is 0.9 g/Ah to 1.4 g/Ah. In this case, while the demand for the electrolyte required in pores of film layers of the positive electrode plate and the negative electrode plate during charge and discharge can be satisfied, the energy density of the secondary battery can be further improved.

In any embodiment, a mass percentage of the silicon-based material in the negative electrode active material is 40% to 100%. In this case, the energy density of the secondary battery can be further improved.

A second aspect of this application provides an electric apparatus, including the secondary battery according to the first aspect of this application.

In the secondary battery of this application, for the positive electrode plate and the negative electrode plate, compacted densities are high; an extremely small total amount of electrolyte is used, and an amount of the electrolytic solution outside the bare cell is minimized in the electrolyte for not contributing to capacity performance; and a high-nickel ternary positive electrode material and a high-silicon negative electrode active material are used, and a coating weight of active material is large. In this case, the secondary battery has a high energy density.

## BRIEF DESCRIPTION OF DRAWINGS

To better describe and illustrate embodiments and/or examples of this application, reference may be made to one or more drawings. Additional details or examples used to describe the drawings should not be considered as limitations on the scope of any of the disclosed application, the presently described embodiments and/or examples, or the best mode of these applications as currently understood.

FIG. 1 is a schematic diagram of a secondary battery according to an embodiment of this application;

FIG. 2 is an exploded view of the secondary battery according to the embodiment of this application shown in FIG. 1; and

FIG. 3 is a schematic diagram of an electric apparatus using a secondary battery as a power source according to an embodiment of this application.

Reference signs:

5. secondary battery; 51. housing; 52. electrode assembly; 53. cover plate; and 6. electric apparatus.

## DESCRIPTION OF EMBODIMENTS

Hereinafter, some embodiments specifically disclosing a secondary battery and an electric apparatus of this application are described in detail with appropriate reference to the drawings. However, unnecessary detailed descriptions may be omitted in some cases. For example, detailed descriptions of well-known matters or repetitive descriptions of substantially identical structures may be omitted. This is to prevent the following description from becoming unnecessarily lengthy, facilitating understanding by persons skilled in the art. Furthermore, the drawings and the following description are provided for persons skilled in the art to fully understand this application and are not intended to limit the subject matter recited in the claims.

A "range" disclosed in this application is defined in a form of lower and upper limits. A given range is defined by one selected lower limit and one selected upper limit, where the selected lower limit and upper limit define boundaries of the specified range. A range defined in this manner may include or exclude end values, and may be arbitrarily combined, meaning any lower limit may be combined with any upper limit to form a range. For example, if ranges of 60 to 120 and 80 to 110 are provided for a specific parameter, it is understood that ranges of 60 to 110 and 80 to 120 can also be anticipated. Additionally, if minimum range values of 1 and 2 are listed, and if maximum range values of 3, 4, and 5 are listed, the following ranges can all be anticipated: 1 to 3, 1 to 4, 1 to 5, 2 to 3, 2 to 4, and 2 to 5. In this application, unless otherwise stated, a value range of "a to b" is abbreviation of any combination of real numbers between a and b, where both a and b are real numbers. For example, a value range of "0 to 5" means that all real numbers in the range of "0 to 5" are listed herein, and "0 to 5" is just abbreviation of a combination of these values. Additionally, when a parameter is expressed as "an integer is greater than or equal to 2", it is equivalent to disclosing that the parameter is, for example, an integer 2, 3, 4, 5, 6, 7, 8, 9, 10, 11, 12, or the like.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps of this application can be performed sequentially or randomly, and preferably, the steps are performed sequentially. For example, a method including steps (a) and (b) indicates that the method may include steps (a) and (b) performed sequentially or may include steps (b) and (a) performed sequentially. For example, the foregoing method may further include step (c). This indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, "include" and "contain" may indicate that other components not listed may also be included or contained, or only the listed components may be included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

A weight described in the specification of this application may be a weight unit known in the chemical field, such as $\mu g$, mg, g, or kg.

Currently, as application of secondary batteries becomes increasingly broad, higher requirements have been imposed on energy density of secondary batteries. Existing high-specific-energy secondary batteries typically employ a lithium metal negative electrode; however, due to excessively high activity and extremely poor stability of the lithium metal negative electrode, practical application of high-specific-energy secondary batteries with lithium metal negative electrodes is limited. Therefore, seeking a secondary battery that uses a non-lithium metal negative electrode and has a high energy density has become one of the key directions focused by persons skilled in the art. In this regard, this application provides a secondary battery that does not require a lithium metal negative electrode and has a high energy density.

In some embodiments, a first aspect of this application provides a secondary battery, including:

a positive electrode plate, where the positive electrode plate has a positive electrode active material; the positive electrode active material includes $Li_aNi_xCo_yM_zO_2$, where $0.2 \leq a \leq 1.2$, $0.85 \leq x \leq 1$, $0 \leq y < 0.15$, $x+y+z=1$, and M includes one or more of Mn and Al; a coating weight of the positive electrode active material is 19 mg/cm$^2$ to 45 mg/cm$^2$; and a compacted density of the positive electrode plate is 3.2 g/cm$^3$ to 3.8 g/cm$^3$;

a negative electrode plate, where the negative electrode plate has a negative electrode active material; a mass percentage of a silicon-based material in the negative electrode active material is 20% to 100%; a coating weight of the negative electrode active material is 5 mg/cm$^2$ to 13 mg/cm$^2$; and a compacted density of the negative electrode plate is 1.1 g/cm$^3$ to 1.9 g/cm$^3$; and

an electrolyte, where an amount of the electrolyte in the secondary battery is 0.8 g/Ah to 1.5 g/Ah; the electrolyte includes an electrolytic solution; and an amount of the electrolytic solution outside a bare cell in the secondary battery is less than or equal to 0.1 g/Ah.

In the secondary battery of this application, for the positive electrode plate and the negative electrode plate, compacted densities are high, reducing a filling amount of the electrolytic solution in pores of a film layer of the electrode plate, and reducing interfacial contact between an active material and the electrolytic solution, thereby reducing side reactions between the active material and the electrolytic solution and lowering a total demand for the electrolytic solution; an extremely small total amount of electrolyte is used, and an amount of the electrolytic solution outside the bare cell is minimized in the electrolyte for not contributing to capacity performance; and a high-nickel ternary positive electrode material and a high-silicon negative electrode active material are used, and a coating weight is large. Through the combination of the above technical means, the secondary battery has a high energy density, with an energy density reaching above 400 Wh/kg. Furthermore, the secondary battery does not require a highly active and poorly stable lithium metal negative electrode to improve the battery energy density, allowing the secondary battery to exhibit good stability.

It can be understood that the amount of the electrolyte in the secondary battery includes an amount of the electrolytic solution and an amount of a gel electrolyte; and the electrolytic solution includes an electrolytic solution inside the bare cell and an electrolytic solution outside the bare cell. The secondary battery is disassembled, the bare cell is removed, and a remaining electrolytic solution in a battery shell is weighed to obtain an amount of the electrolytic solution outside the bare cell. The bare cell is disassembled, and the gel electrolyte and the electrolytic solution therein are removed and weighed. The amount of the gel electrolyte, the amount of the electrolytic solution inside the bare cell, and the amount of the electrolytic solution outside the bare cell are summed to obtain the amount of the electrolyte in the secondary battery. The electrolytic solution outside the bare cell refers to an electrolytic solution freely present outside the bare cell, and this portion of the electrolytic solution does not contribute to capacity performance of the secondary battery. Therefore, to improve the energy density of the secondary battery, a proportion of the electrolytic solution outside the bare cell in the electrolyte should be minimized as much as possible.

It should be noted that, during charge and discharge of the secondary battery, intercalation, deintercalation, and consumption of Li occur, and a molar percentage of Li varies when the secondary battery is discharged to different states. In this application, a range of values for a in the positive electrode active material $Li_aNi_xCo_yM_zO_2$ includes a molar percentage of Li under different charge and discharge states of the secondary battery (usually, a battery voltage is 2 V to 5 V).

It can be understood that the coating weight of the positive electrode active material in the positive electrode plate may be, but is not limited to, 19 mg/cm$^2$, 20 mg/cm$^2$, 22 mg/cm$^2$, 24 mg/cm$^2$, 26 mg/cm$^2$, 28 mg/cm$^2$, 30 mg/cm$^2$, 32 mg/cm$^2$, 34 mg/cm$^2$, 36 mg/cm$^2$, 38 mg/cm$^2$, 40 mg/cm$^2$, 42 mg/cm$^2$, 44 mg/cm$^2$, or 45 mg/cm$^2$; the compacted density of the positive electrode plate may be, but is not limited to, 3.2 g/cm$^3$, 3.3 g/cm$^3$, 3.4 g/cm$^3$, 3.5 g/cm$^3$, 3.6 g/cm$^3$, 3.7 g/cm$^3$, or 3.8 g/cm$^3$; a mass percentage of the silicon-based material in the negative electrode active material may be, but is not limited to, 20%, 30%, 40%, 50%, 60%, 70%, 80%, 90%, or 100%; the coating weight of the negative electrode active material may be, but is not limited to, 5 mg/cm$^2$, 6 mg/cm$^2$, 7 mg/cm$^2$, 8 mg/cm$^2$, 9 mg/cm$^2$, 10 mg/cm$^2$, 11 mg/cm$^2$, 12 mg/cm$^2$, or 13 mg/cm$^2$; the compacted density of the negative electrode plate may be, but is not limited to, 1.1 g/cm$^3$, 1.2 g/cm$^3$, 1.3 g/cm$^3$, 1.4 g/cm$^3$, 1.5 g/cm$^3$, 1.6 g/cm$^3$, 1.7 g/cm$^3$, 1.8 g/cm$^3$, or 1.9 g/cm$^3$; the amount of the electrolyte in the secondary battery may be, but is not limited to, 0.8 g/Ah, 0.9 g/Ah, 1.0 g/Ah, 1.1 g/Ah, 1.2 g/Ah, 1.3 g/Ah, 1.4 g/Ah, or 1.5 g/Ah; and the amount of the electrolytic solution outside the bare cell in the electrolyte may be, but is not limited to, 0 g/Ah, 0.01 g/Ah, 0.02 g/Ah, 0.03 g/Ah, 0.04 g/Ah, 0.05 g/Ah, 0.06 g/Ah, 0.07 g/Ah, 0.08 g/Ah, 0.09 g/Ah, or 0.1 g/Ah.

In some of these embodiments, the coating weight of the positive electrode active material is 25 mg/cm$^2$ to 35 mg/cm$^2$. If the coating weight of the positive electrode active material in the positive electrode plate is excessively low, a proportion of the active material decreases, and relative weight proportions of a substrate, a shell, and auxiliary materials in the battery increase, reducing a gravimetric energy density of the battery; and if the coating weight is excessively high, a positive electrode film layer becomes excessively thick, making it difficult to achieve a set compacted density. The coating weight of the positive electrode active material is controlled within a range of 25 mg/cm$^2$ to 35 mg/cm$^2$. This can further improve the energy density of the secondary battery.

In some of these embodiments, the compacted density of the positive electrode plate is 3.5 g/cm$^3$ to 3.7 g/cm$^3$. In this way, a total demand for the electrolytic solution in the positive electrode film layer can be further reduced, thereby further improving the energy density of the secondary battery.

In some of these embodiments, the coating weight of the negative electrode active material in the negative electrode plate is 7 mg/cm$^2$ to 10.5 mg/cm$^2$. The energy density of the secondary battery can be further improved.

In some of these embodiments, the compacted density of the negative electrode plate is 1.6 g/cm$^3$ to 1.8 g/cm$^3$. In this way, a total demand for the electrolytic solution in the negative electrode film layer can be further reduced, thereby further improving the energy density of the secondary battery.

In some of these embodiments, the amount of the electrolyte in the secondary battery is 0.9 g/Ah to 1.4 g/Ah. In this case, while the demand for the electrolyte required in pores of film layers of the positive electrode plate and the negative electrode plate during charge and discharge can be satisfied, the total amount of the electrolyte is further reduced, thereby further improving the energy density of the secondary battery.

In some of these embodiments, the mass percentage of the silicon-based material in the negative electrode active material is 40% to 100%. In this case, a higher proportion of the silicon-based material in the negative electrode active material can further improve the energy density of the secondary battery.

In some of these embodiments, the secondary battery further includes a separator, where the separator is disposed between the positive electrode plate and the negative electrode plate, and a spacing between the separator and the positive electrode plate is 0 μm to 20 μm. The spacing between the separator and the positive electrode plate is controlled within 20 μm, to ensure that sufficient electrolyte can be filled between the positive electrode plate and the separator. In this way, a demand for electrolytic solution retention and filling of the positive electrode film layer can be better satisfied, and the electrolytic solution can be primarily concentrated inside the bare cell, reducing the amount of the electrolytic solution outside the bare cell, thereby improving the energy density of the secondary battery.

In some of these embodiments, a spacing between the separator and the negative electrode plate is 0 μm to 20 μm, to ensure that sufficient electrolyte can be filled between the negative electrode plate and the separator. In this way, a demand for electrolytic solution retention and filling of the negative electrode film layer can be better satisfied, and the electrolytic solution can be further concentrated inside the bare cell, further reducing the amount of the electrolytic solution outside the bare cell, thereby further improving the energy density of the secondary battery.

In some of these embodiments, the spacing between the separator and the positive electrode plate and the spacing between the separator and the negative electrode plate can be controlled through adjusting a magnitude of winding tension during stacking and winding of the positive electrode plate, the separator, and the negative electrode plate to form an electrode assembly.

Specifically, when the spacing between the electrode plate and the separator needs to be reduced, a tension during winding of the electrode plate may be appropriately increased; and when the spacing between the electrode plate and the separator needs to be increased, the tension during winding of the electrode plate may be appropriately reduced. When the winding tension is low, the spacing between the wound electrode plate and separator is large, capable of accommodating more electrolyte. However, if the winding tension is excessively low, the spacing between the electrode plate and the separator becomes excessive large, affecting battery kinetics and increasing a risk of lithium precipitation. Therefore, a magnitude of the winding tension needs to be controlled within an appropriate range to keep the spacing between the electrode plate and the separator within a set range.

In some of these embodiments, a surface of the separator is further provided with a first high liquid-absorbent polymer layer, and an equilibrium swelling ratio of a high liquid-absorbent polymer in the first high liquid-absorbent polymer layer is 150% to 300%. The above high liquid-absorbent polymer is provided on the surface of the separator, a capability of electrolytic solution retention between the separator and the electrode plates inside the bare cell can be further improved, allowing the electrolyte to be further concentrated inside the bare cell, further reducing the amount of the electrolytic solution outside the bare cell, thereby further improving the energy density of the secondary battery.

In some of these embodiments, a surface of the positive electrode plate and/or the negative electrode plate is provided with a second high liquid-absorbent polymer layer, and an equilibrium swelling ratio of a high liquid-absorbent polymer in the second high liquid-absorbent polymer layer is 150% to 300%. Similarly, the above high liquid-absorbent polymer is provided on the surface of the positive electrode plate and/or the negative electrode plate, a capability of electrolytic solution retention between the separator and the electrode plates inside the bare cell can also be further improved, allowing the electrolyte to be further concentrated inside the bare cell, further reducing the amount of the electrolytic solution outside the bare cell, thereby further improving the energy density of the secondary battery.

It can be understood that the above high liquid-absorbent polymer may be provided only on one surface of the separator, or the above high liquid-absorbent polymer may be provided on both opposite surfaces of the separator, or the above high liquid-absorbent polymer may be provided only on one surface of the positive electrode plate or the negative electrode plate, or the above high liquid-absorbent polymer may be provided on the surfaces of both the positive electrode plate and the negative electrode plate, or the above high liquid-absorbent polymer may be provided on both the surface of the separator and the surfaces of the electrode plates.

It should be noted that the equilibrium swelling ratio of the high liquid-absorbent polymer can reflect a level of the electrolytic solution retention capability of the high liquid-absorbent polymer. The equilibrium swelling ratio of the high liquid-absorbent polymer can be calculated according to the following formula: $Q=Ws/Wd$, where $Q$ is the equilibrium swelling ratio of the high liquid-absorbent polymer, $Ws$ is a polymer weight of the high liquid-absorbent polymer reaching swelling equilibrium, and $Wd$ is a dry weight of the high liquid-absorbent polymer.

It can be understood that, when the high liquid-absorbent polymer comes into contact with the electrolytic solution solvent, molecular segments between the polymer crosslinks remain long and considerably flexible, making it easy for solvent molecules to penetrate into the polymer, causing the polymer to swell in volume. However, stretching of the molecular segments between the crosslink points reduces the configurational entropy, causing the molecular network to generate an elastic contraction force that prevents solvent molecules from entering the network. When these two opposing forces counterbalance each other, the system reaches swelling equilibrium, and a volume of the polymer no longer changes.

In some of these embodiments, a coating weight of the high liquid-absorbent polymer is 0.1 mg/cm$^2$ to 1.4 mg/cm$^2$. Controlling the coating weight of the high liquid-absorbent polymer between 0.1 mg/cm$^2$ and 1.4 mg/cm$^2$ can effectively satisfy requirements of the positive electrode plate and the negative electrode plate for electrolytic solution retention. It can be understood that the coating weight of the high liquid-absorbent polymer may be, but is not limited to, 0.1 mg/cm$^2$, 0.2 mg/cm$^2$, 0.3 mg/cm$^2$, 0.4 mg/cm$^2$, 0.5 mg/cm$^2$, 0.6 mg/cm$^2$, 0.7 mg/cm$^2$, 0.8 mg/cm$^2$, 0.9 mg/cm$^2$, 1.0 mg/cm$^2$, 1.1 mg/cm$^2$, 1.2 mg/cm$^2$, 1.3 mg/cm$^2$, or 1.4 mg/cm$^2$.

In some of these embodiments, a coating weight of the high liquid-absorbent polymer is 0.1 mg/cm$^2$ to 1.0

mg/cm². In this way, while the requirements of the positive electrode plate and the negative electrode plate for electrolytic solution retention are satisfied, an amount of the used high liquid-absorbent polymer can be further reduced.

In some of these embodiments, the high liquid-absorbent polymer can be dissolved in an organic solvent such as acetone, and then applied to the surface of the separator or the electrode plate by spraying, dip coating, rolling, or other methods, thereby forming a coating of the high liquid-absorbent polymer on the separator or the electrode plate.

In some of these embodiments, the high liquid-absorbent polymer includes one or more of a polyacrylate electrolyte, a polyether electrolyte, a polycarbonate electrolyte, a polycarboxylate electrolyte, a silicon-based electrolyte, a polythiol electrolyte, a maleic anhydride electrolyte, and a polysulfate electrolyte.

In some of these embodiments, the electrolyte further includes a gel electrolyte, and a mass ratio of the gel electrolyte to the electrolytic solution is 1:(0.05 to 0.4). A specific amount of the gel electrolyte is used, the electrolytic solution retention capability for the electrolytic solution inside the bare cell and in the pores of film layers of the electrode plates can be further enhanced, and the electrolytic solution can be better retained within the bare cell, reducing extrusion of the electrolytic solution due to swelling of the high-silicon electrode plate during charge. Meanwhile, with a certain amount of liquid electrolytic solution, electrode interface wetting can be improved, and the performance of the gel electrolyte in terms of capacity and electrical properties can be improved.

It can be understood that a mass ratio of the gel electrolyte to the electrolytic solution in the electrolyte may be, but is not limited to, 1:0.05, 1:0.08, 1:0.10, 1:0.12, 1:0.14, 1:0.16, 1:0.18, 1:0.20, 1:0.22, 1:0.24, 1:0.26, 1:0.28, 1:0.30, 1:0.32, 1:0.34, 1:0.36, 1:0.38, or 1:0.40.

In some of these embodiments, a mass ratio of the gel electrolyte to the electrolytic solution is 1:(0.05 to 0.25). In this case, the electrolytic solution retention capability of the electrolytic solution inside the bare cell and in pores of film layers of the electrode plates can be further improved, better locking the electrolytic solution within the bare cell.

In some of these embodiments, a specific amount of a polymer monomer and an initiator may be added to the electrolytic solution during electrolyte injection of the secondary battery, and the polymer monomer undergoes in-situ polymerization under heating to form the gel electrolyte. It can be understood that an amount of the gel electrolyte in the electrolyte can be adjusted and controlled based on an amount of the polymer monomer and the initiator added to the electrolytic solution during the electrolyte injection.

In some of these embodiments, a monomer forming the gel electrolyte includes one or more of methyl methacrylate, methyl acrylate, ethyl methacrylate, ethyl acrylate, n-butyl methacrylate, butyl acrylate, n-octyl methacrylate, n-octyl acrylate, vinyl acetate, vinylene carbonate, vinyl ethylene carbonate, triethylene glycol dimethacrylate, diethylene glycol dimethacrylate, ethylene glycol dimethacrylate, allyl methacrylate, divinylbenzene, polyvinyl alcohol, and styrene.

In some of these embodiments, the initiator forming the gel electrolyte includes one or more of a persulfate, an azo initiator, and an organic peroxide initiator.

A second aspect of this application provides an electric apparatus, where the electric apparatus includes the secondary battery according to the first aspect of this application.

The secondary battery and the electric apparatus of this application are described below with appropriate reference to the drawings.

Unless otherwise specified, components, material types, or contents mentioned cab be applied to both lithium-ion secondary batteries and sodium-ion secondary batteries.

An embodiment of this application provides a secondary battery.

Typically, a secondary battery includes a positive electrode plate, a negative electrode plate, an electrolyte, and a separator. In a charge/discharge process of the battery, active ions intercalate and deintercalate between the positive electrode plate and the negative electrode plate. The electrolyte conducts ions between the positive electrode plate and the negative electrode plate. The separator is disposed between the positive electrode plate and the negative electrode plate, primarily serving to prevent a short circuit between the positive electrode and negative electrode while allowing passage of ions.

[Positive electrode plate]

The positive electrode plate includes a positive electrode current collector and a positive electrode film layer disposed on at least one surface of the positive electrode current collector.

For example, the positive electrode current collector includes two opposite surfaces in a thickness direction of the positive electrode current collector, and the positive electrode film layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material substrate and a metal layer formed on at least one surface of the polymer material substrate. The composite current collector may be formed based on formation of a metal material on a polymer material substrate. The metal material includes, but is not limited to, aluminum, aluminum alloy, nickel, nickel alloy, titanium, titanium alloy, silver, or silver alloy. The polymer material substrate (is a substrate such as polypropylene (PP), polyethylene terephthalate (PET), polybutylene terephthalate (PBT), polystyrene (PS), or polyethylene (PE)).

In some embodiments of this application, the positive electrode active material includes a high-nickel ternary positive electrode material; a coating weight of the positive electrode active material is 19 mg/cm$^2$ to 45 mg/cm$^2$; and a compacted density of the positive electrode plate is 3.2 g/cm$^3$ to 3.8 g/cm$^3$.

In some embodiments, a weight ratio of the positive electrode active material in the positive electrode film layer is 80wt% to 100wt%, based on a total weight of the positive electrode film layer.

In some embodiments, the positive electrode film layer may further optionally include a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylic resin. A weight ratio of the binder in the positive electrode film layer is 0wt% to 20wt%, based on the total weight of the positive electrode film layer.

In some embodiments, the positive electrode film layer further optionally includes a conductive agent. For example, the conductive agent may include at least one of superconductive carbon, acetylene black, carbon black, Ketjen black, carbon dots, carbon nanotubes, graphene, or carbon nanofibers. A weight ratio of the conductive agent in the positive electrode film layer is 0wt% to 20wt%, based on the total weight of the positive electrode film layer.

In some embodiments, the positive electrode plate can be prepared according to the following method: the foregoing components for preparing the positive electrode plate, such as the positive electrode active material, the conductive agent, the binder, and any other components, are dispersed in a solvent (for example, N-methylpyrrolidone) to form a positive electrode slurry, where a solid content of the positive electrode slurry is 40 percentage by weight (wt%) to 80 wt%, and a viscosity at room temperature is adjusted to 5000 millipascal second (mPa·s) to 25000 mPa·s; and the positive electrode slurry is applied to a surface of the positive electrode current collector, dried, and then cold-pressed by a cold rolling machine to form the positive electrode plate, where a compacted density of the positive electrode plate is 3.2 gram per cubic centimeter (g/cm$^3$) to 3.8 g/cm$^3$, optionally, 3.5 g/cm$^3$ to 3.7 g/cm$^3$.

A calculation formula for the compacted density is:

compacted density=coating surface density/(thickness of pressed electrode plate-thickness of current collector)

A mass M of the positive electrode active material per unit area of the positive electrode film can be obtained by weighing with a standard balance.

A thickness T of the positive electrode film may be measured with a micrometer, for example, with a Mitutoyo 293-100 micrometer with a resolution of 0.1 μm. It should be noted that the thickness of the positive electrode film described in this application refers to a thickness of the positive electrode film in the cold-pressed positive electrode plate used for assembling the battery.

[Negative electrode plate]

The negative electrode plate includes a negative electrode current collector and a negative electrode film layer disposed on at least one surface of the negative electrode current collector, and the negative electrode film layer includes a negative electrode active material.

For example, the negative electrode current collector includes two opposite surfaces in a thickness direction of the negative electrode current collector, and the negative electrode film layer is disposed on either or both of the two opposite surfaces of the negative electrode current collector.

In some embodiments, the negative electrode current collector may be a metal foil or a composite current collector. For example, for the metal foil, a copper foil may be used. The composite current collector may include a polymer material substrate and a metal layer formed on at least one surface of the polymer material substrate. The composite current collector may be formed based on formation of a metal material on a polymer material substrate. The metal material includes, but is not limited to, copper, copper alloy, nickel, nickel alloy, titanium, titanium alloy, silver, silver alloy, or the like. The polymer material substrate includes, but is not limited to, a substrate such as polypropylene (PP), polyethylene terephthalate (PET), polybutylene terephthalate (PBT), polystyrene (PS), or polyethylene (PE).

In some embodiments, the negative electrode active material may be a negative electrode active material used for batteries well-known in the art.

For example, the negative electrode active material of a lithium-ion secondary battery includes a silicon-based material and may further include at least one of the following materials: artificial graphite, natural graphite, soft carbon, hard carbon, a tin-based material, or lithium titanate. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, or a tin alloy. However, this application is not limited to these materials, and other conventional materials that can be used as negative electrode active materials for batteries may be alternatively used.

In some embodiments, the negative electrode film layer may further optionally include a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS). A weight ratio of the binder in the negative electrode film layer is Owt% to 30wt%, based on a total weight of the negative electrode film layer.

In some embodiments, the negative electrode film layer may further optionally include a conductive agent. The conductive agent may be selected from at least one of superconductive carbon, acetylene black, carbon black, Ketjen black, carbon dots, carbon nanotubes, graphene, or carbon nanofibers. A weight ratio of the conductive agent in the negative electrode film layer is Owt% to 20wt%, based on the total weight of the negative electrode film layer.

In some embodiments, the negative electrode film layer may further optionally include another auxiliary such as a thickener (for example, sodium carboxymethyl cellulose (CMC-Na)). A weight ratio of the another auxiliary in the negative electrode film layer is Owt% to 15wt%, based on the total weight of the negative electrode film layer.

In some embodiments, the negative electrode plate can be prepared according to the following method: the foregoing components for preparing the negative electrode plate, such as the negative electrode active material, the conductive agent, the binder, and any other components, are dispersed in a solvent (for example, deionized water) to form a negative electrode slurry, where a solid content of the negative electrode slurry is 30wt% to 70wt%, and a viscosity at room temperature is adjusted to 2000 mPa·s to 10000 mPa·s; and the obtained negative electrode slurry is applied to the negative electrode current collector, dried, and cold-pressed, for example, through calendering, to obtain the negative electrode plate, where a compacted density of the negative electrode plate is 1.1 gram per cubic meter ($g/m^3$) to 1.9 $g/m^3$.

A mass M of the negative electrode active material per unit area of the negative electrode film can be obtained by weighing with a standard balance.

A thickness T of the negative electrode film may be measured with a micrometer, for example, with a Mitutoyo 293-100 micrometer with a resolution of 0.1 $\mu$m. It should be noted that the thickness of the negative electrode film described in this application refers to a thickness of the negative electrode film in the cold-pressed negative electrode plate used for assembling the battery.

[Electrolyte]

The electrolyte serves to conduct ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte includes an electrolytic solution. The electrolytic solution includes an electrolytic salt and a solvent.

In some embodiments, an electrolytic salt for a lithium-ion secondary battery may be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluoro(bisoxalato)phosphate (LiDFOP), or lithium tetrafluoro(oxalato)phosphate (LiTFOP).

The electrolytic salt for the sodium-ion secondary battery may be selected from one or more of sodium hexafluorophosphate, sodium bis(fluorosulfonyl)imide, sodium bis(trifluoromethanesulfonyl)imide, sodium trifluoromethanesulfonate, sodium tetrafluoroborate, sodium difluorophosphate, sodium perchlorate, and sodium chloride.

A concentration of the electrolytic salt is typically 0.5 moles per liter (mol/L) to 5 mol/L.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methy propyl carbonate (MPC), ethylene propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfonane (SF), methyl sulfonyl methane (MSM), ethyl methanesulfonane (EMS), and ethylsulfonyl ethane (ESE).

In some embodiments, the electrolytic solution may further optionally include an additive. For example, the additive may include a negative electrode film-forming additive and a positive electrode film-forming additive, and may also include additives capable of improving certain battery performance, such as an additive improving battery overcharge performance, an additive improving battery high-temperature or low-temperature performance, or the like.

In some embodiments, the electrolyte further includes a gel electrolyte.

[Separator]

In some embodiments, the secondary battery further includes a separator. A type of the separator is not particularly limited in this application, and any well-known porous-structure separator with good chemical stability and mechanical stability may be selected.

In some embodiments, a material of the separator may be selected from at least one of glass fiber, non-woven fabric, polyethylene, polypropylene, or polyvinylidene fluoride. The separator may be a single-layer film or a multilayer composite film. This is not particularly limited. When the separator is a multilayer composite film, materials of each layer may be the same or different. This is not particularly limited.

In some embodiments, a thickness of the separator is 6 $\mu$m to 40 $\mu$m, optionally, 12 $\mu$m to 20 $\mu$m.

In some embodiments, the positive electrode plate, the negative electrode plate, and the separator may be formed into an electrode assembly through winding or lamination.

In some embodiments, the secondary battery may include an outer package. The outer package may be used to encapsulate the above electrode assembly and electrolyte.

In some embodiments, the outer package of the secondary battery may be a hard housing, for example, a hard plastic housing, an aluminum housing, or a steel housing. The outer package of the secondary battery may also be a soft package, such as a pouch. A material of the soft package may be plastic, and examples of plastic include polypropylene, polybutylene terephthalate, and polybutylene succinate.

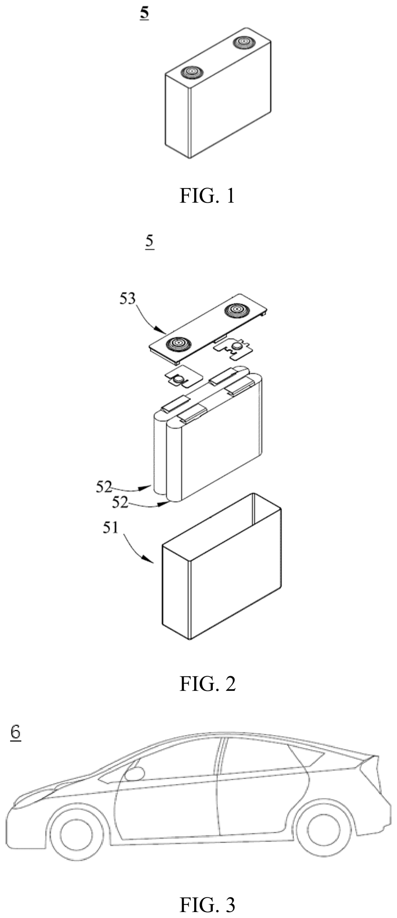

A shape of the secondary battery is not particularly limited in this application, and may be cylindrical, square, or any other shape. For example, FIG. 1 shows a secondary battery 5 with a square structure as an example.

Refer to FIG. 2. In some embodiments, the outer package may include a housing 51 and a cover plate 53. The housing 51 may include a bottom plate and a side plate connected to the bottom plate, where the bottom plate and the side plate enclose an accommodating cavity. The housing 51 has an opening communicating with the accommodating cavity, and the cover plate 53 can cover the opening to seal the accommodating cavity. The positive electrode plate, the negative electrode plate, and the separator may form an electrode assembly 52 through winding or lamination. The electrode assembly 52 is packaged in the accommodating cavity. The electrolytic solution infiltrates the electrode assembly 52. One or more electrode assemblies 52 may be contained in the secondary battery 5. Persons skilled in the art may make selections based on specific actual needs.

In some embodiments, the secondary battery 5 may be assembled into a battery module. One or more secondary batteries 5 may be contained in the battery module. A specific quantity may be determined by persons skilled in the art based on an application and capacity of the battery module.

In the battery module, the plurality of secondary batteries 5 may be arranged sequentially along a length direction of the battery module. Certainly, the plurality of secondary batteries 5 may alternative be arranged in any other manner. Further, the plurality of secondary batteries 5 may be fixed by fasteners.

Optionally, the battery module may further include a casing with an accommodating space, and the plurality of secondary batteries 5 are accommodated in the accommodating space.

In some embodiments, the above battery module may alternatively be assembled into a battery pack. One or more battery modules may be contained in the battery pack. A specific quantity may be determined by persons skilled in the art based on an application and capacity of the battery pack.

The battery pack may include a battery box and a plurality of battery modules arranged in the battery box. The battery box includes an upper box body and a lower box body. The upper box body can cover the lower box body to form an enclosed space for accommodating the battery module. The plurality of battery modules may be arranged in the battery box in any manner.

Additionally, this application further provides an electric apparatus, where the electric apparatus includes at least one of the secondary battery, the battery module, or the battery pack provided by this application. The secondary battery, the battery module, or the battery pack may be used as a power source of the electric apparatus or as an energy storage unit of the electric apparatus. The electric apparatus may include mobile devices (such as mobile phones or laptops), electric vehicles (such as a pure electric vehicle, a hybrid electric vehicle, a plug-in hybrid electric vehicle, an electric bicycle, an electric scooter, an electric golf cart or an electric truck), electric trains, ships, satellites, energy storage systems, or the like, but is not limited thereto.

The secondary battery, the battery module, or the battery pack may be selected for the electric apparatus based on usage requirements.

FIG. 3 shows an electric apparatus as an example. The electric apparatus is a battery electric vehicle, a hybrid electric vehicle, or a plug-in hybrid electric vehicle, or the like. To meet a demand of the electric apparatus for high power and high energy density of the secondary battery, a battery pack or a battery module may be used.

In another example, the apparatus may be a mobile phone, a tablet computer, a notebook computer, or the like. The apparatus typically needs to be thin and light, and the secondary battery may be used as a power source.

The following are some examples.

To make technical problems that needs to be solved by this application, technical solutions, and beneficial effects clearer, this application is further described in detail below with reference to examples and drawings. It is clear that the described examples are merely some but not all of the examples of this application. The following description of at least one illustrative example is merely for explanation and definitely is not construed as any limitation on this application or on use of this application. All other examples obtained by persons of ordinary skill in the art based on the examples of this application without creative efforts shall fall within the protection scope of this application.

Examples in which technical solutions or conditions are not specified are made in accordance with technical solutions or conditions described in literature in the field or made in accordance with product instructions. The reagents or instruments used are all conventional products that are commercially available if no manufacturer is indicated.

I. Examples

Example 1

1. Preparation of positive electrode plate

A positive electrode active material $Li_aNi_xCo_yM_zO_2$, a conductive agent superconductive carbon SP, and a binder PVDF were thoroughly stirred and mixed uniformly in an N-methylpyrrolidone solvent in a weight ratio of 98:1:1 to obtain a positive electrode slurry; and the positive electrode slurry was applied to a positive electrode current collector aluminum foil, dried, and cold-pressed to obtain a positive electrode plate. A coating weight of the positive electrode active material was 30 mg/cm$^2$, and a compacted density of the positive electrode plate was 3.5 g/cm$^3$. In a chemical formula of the positive electrode active material, a was 1, x was 0.92, y was

$$0.05, \text{x+y+z=1,}$$

and M was Mn.

2. Preparation of negative electrode plate

A negative electrode active material graphite+silicon oxide, a conductive agent carbon nanotubes+superconductive carbon, a binder styrene-butadiene rubber SBR, and a thickener sodium carboxymethyl cellulose CMC were thoroughly stirred and mixed uniformly in deionized water in a mass ratio of 94:2:3:1 to obtain a negative electrode slurry; and the negative electrode slurry was applied to a negative electrode current collector copper foil, dried, and cold-pressed to obtain a negative electrode plate. A mass percentage of a silicon-based material in the negative electrode active material was 40%, a coating weight of the negative electrode active material was 9 mg/cm$^2$, and a compacted density of the negative electrode plate was 1.7 g/cm$^3$.

3. Separator

A polyethylene (PE) separator was used.

4. Cell assembly

The positive electrode plate, the separator, and the negative electrode plate were stacked and wound into a bare cell, and the bare cell was placed in the outer package to obtain a dry cell. During preparation of the bare cell, a spacing between the positive electrode plate and the separator was adjusted to 20 μm, and a spacing between the negative electrode plate and the separator was adjusted to 20 μm by controlling a magnitude of tension during winding of the electrode plates.

5. Electrolyte injection

Electrolyte injection was performed on the dry cell, with the injection divided into two stages. A mass ratio of a first injection to a second injection was 9:1. Raw electrolyte material components for the first injection were: an electrolytic stock solution, a monomer, and an initiator, and a mass ratio was 94.5:5:0.5. An organic solvent of the electrolytic stock solution was a mixture of ethylene carbonate (EC), ethyl methyl carbonate (EMC), and diethyl carbonate (DEC). A volume ratio of EC, EMC, and DEC was 20:20:60. A lithium salt of the electrolytic stock solution was $LiPF_6$, with a concentration of 1 mol/L. The monomer was ethylene glycol dimethacrylate. The initiator was azobisisobutyronitrile (AIBN).

The electrolyte for the second injection was only the electrolytic stock solution. After the first injection was completed, vacuum sealing was performed, followed by standing for impregnation. Heating was performed to polymerize the polymer monomer in the raw electrolyte materials to form a gel electrolyte. Then, the electrolytic stock solution for the second injection was injected. A total electrolyte mass of the cell was 1.3 g/Ah. A mass ratio of the gel electrolyte to a liquid electrolytic solution in the electrolyte after heating and polymerization was 1:0.11, and an amount of the electrolytic solution outside the bare cell in the electrolytic solution was 0.05 g/Ah.

Example 2

This example was substantially the same as Example 1, and differences only lied in the high-nickel ternary positive electrode material and the coating weight of the positive electrode active material. In this example, the chemical formula of the high-nickel ternary positive electrode material was $Li_aNi_xCo_yM_zO_2$, where a was 1, x was 0.9, y was 0.05, x+y+z=1, and M was Mn; and a coating weight of a positive electrode active material was 30.5 mg/cm$^2$.

Example 3

This example was substantially the same as Example 1, and differences only lied in the coating weight of the positive electrode active material in the positive electrode plate and coating weight of the negative electrode active material in the negative electrode plate. In this example, the coating weight of the positive electrode active material was 25 mg/cm$^2$, and the coating weight of the negative electrode active material was 7.5 mg/cm$^2$.

Example 4

This example was substantially the same as Example 1, and differences only lied in the coating weight of the positive electrode active material in the positive electrode plate and coating weight of the negative electrode active material in the negative electrode plate. In this example, the coating weight of the positive electrode active material was 35 mg/cm$^2$, and the coating weight of the negative electrode active material was 10.5 mg/cm$^2$.

Example 5

This example was substantially the same as Example 1, and differences only lied in the coating weight of the positive electrode active material in the positive electrode plate and coating weight of the negative electrode active material in the negative electrode plate. In this example, the coating weight of the positive electrode active material was 40 mg/cm$^2$, and the coating weight of the negative electrode active material was 12 mg/cm$^2$.

Example 6

This example was substantially the same as Example 1, and the only difference lied in the compacted density of the positive electrode plate. In this example, the compacted density of the positive electrode plate was 3.7 g/cm$^3$.

Example 7

This example was substantially the same as Example 1, and the only difference lied in the compacted density of the positive electrode plate. In this example, the compacted density of the positive electrode plate was 3.8 g/cm$^3$.

Example 8

This example was substantially the same as Example 1, and the only difference lied in the coating weight of the negative electrode active material of the negative electrode plate. In this example, the coating weight of the negative electrode active material was 13 mg/cm$^2$.

Example 9

This example was substantially the same as Example 1, and the only difference lied in the compacted density of the negative electrode plate. In this example, the compacted density of the negative electrode plate was 1.6 g/cm$^3$.

Example 10

This example was substantially the same as Example 1, and the only difference lied in the compacted density of the negative electrode plate. In this example, the compacted density of the negative electrode plate was 1.8 g/cm$^3$.

Example 11

This example was substantially the same as Example 1, and the only difference lied in the amount of the electrolyte in the secondary battery. In this example, the amount of the electrolyte was 0.9 g/Ah.

Example 12

This example was substantially the same as Example 1, and the only difference lied in the amount of the electrolyte in the secondary battery. In this example, the amount of the electrolyte was 1.4 g/Ah.

Example 13

This example was substantially the same as Example 1, and the differences only lied in the amount of the electrolyte in the secondary battery and the amount of the electrolytic solution outside the bare cell. In this example, the amount of the electrolyte was 1.35 g/Ah, and the amount of the electrolytic solution outside the bare cell is 0.1 g/Ah.

Example 14

This example was substantially the same as Example 1, and the difference only lied in that in this example, both the positive electrode plate and the negative electrode plate were coated with a polycarbonatediol high liquid-absorbent polymer, the coating weight of the high liquid-absorbent polymer on the positive electrode plate was 0.5 mg/cm$^2$, and the coating weight of the high liquid-absorbent polymer on the negative electrode plate was 0.5 mg/cm$^2$. An equilibrium liquid-absorbent ratio of the high liquid-absorbent polymer was 200%.

Example 15

This example was substantially the same as Example 1, and the difference only lied in the spacing between the separator and the positive electrode plate. In this example, the spacing between the separator and the positive electrode plate was 20 $\mu$m.

Example 16

This example was substantially the same as Example 1, and the difference only lied in the spacing between the separator and the negative electrode plate. In this example, the spacing between the separator and the negative electrode plate was 20 $\mu$m.

Example 17

This example was substantially the same as Example 1, and the difference only lied in that in this example, the surface of the separator was coated with a high liquid-absorbent polymer, an equilibrium swelling ratio of the high liquid-absorbent polymer was 200%, and a coating weight of the high liquid-absorbent polymer was 0.5 mg/cm$^2$.

Example 18

This example was substantially the same as Example 17, and the difference only lied in the coating weight of the high liquid-absorbent polymer on the surface of the separator. In this example, the coating weight of the high liquid-absorbent polymer on the surface of the separator was 1 mg/cm$^2$.

Example 19

This example was substantially the same as Example 17, and the difference only lied in the coating weight of the high liquid-absorbent polymer on the surface of the separator. In this example, the coating weight of the high liquid-absorbent polymer on the surface of the separator was 1.4 mg/cm$^2$.

Example 20

This example was substantially the same as Example 1, and the difference only lied in the mass ratio of the gel electrolyte to a free liquid electrolytic solution in the electrolyte after heating and polymerization. In this example, the mass ratio of the gel electrolyte to the free liquid electrolytic solution in the electrolyte after heating and polymerization was 1:0.25.

II. Comparative examples

Comparative example 1

This comparative example was substantially the same as Example 1, and the difference only lied in that a different positive electrode active material was used in Comparative example 1. In Comparative example 1, the positive electrode active material used in the positive electrode plate was a high-nickel ternary positive electrode material with a chemical formula of $Li_aNi_xCo_yM_zO_2$, where a was 1, x was 0.8, y was 0.1, x+y+z=1, and M was Mn.

Comparative example 2

This comparative example was substantially the same as Example 1, and the difference only lied in the coating weight of the positive electrode active material in the positive electrode plate. In Comparative example 2, the coating weight of the positive electrode active material in the positive electrode plate was 15 mg/cm$^2$.

Comparative example 3

This comparative example was substantially the same as Example 1, and the difference only lied in the compacted density of the positive electrode plate. In Comparative example 3, the compacted density of the positive electrode plate was 3.1 g/cm$^3$.

Comparative example 4

This comparative example was substantially the same as Example 1, and the difference only lied in the negative electrode active material in the negative electrode plate. In Comparative example 4, the negative electrode active material was graphite:silicon oxide=95:5.

Comparative example 5

This comparative example was substantially the same as Example 1, and the difference only lied in the coating weight of the negative electrode active material in the negative electrode plate. In Comparative example 5, the coating weight of the negative electrode active material in the negative electrode plate was 15 mg/cm$^2$.

Comparative example 6

This comparative example was substantially the same as Example 1, and the difference only lied in the compacted density of the negative electrode plate. In Comparative example 6, the compacted density of the negative electrode plate was 1.0 g/cm$^3$.

Comparative example 7

This comparative example was substantially the same as Example 1, and the difference only lied in the amount of the electrolyte in the cell. In Comparative example 7, the amount of the electrolyte in the cell was 1.6 g/Ah.

Comparative example 8

This comparative example was substantially the same as Example 1, and the difference only lied in the amount of the electrolytic solution outside the bare cell. In Comparative example 8, the amount of the electrolytic solution outside the bare cell was 0.2 g/Ah.

Comparative example 9

This comparative example was substantially the same as Example 1, and the difference only lied in the mass ratio of the gel electrolyte to the liquid electrolytic solution in the electrolyte after heating and polymerization. In this example, the mass ratio of the gel electrolyte to the liquid electrolytic solution in the electrolyte after heating and polymerization was 1:0, meaning no liquid electrolytic solution was contained.

III. Test methods

1. Test of amount of electrolytic solution outside bare cell

The bare cell was removed, and the remaining electrolytic solution in the housing was weighed.

2. Test of spacing between separator and electrode plate

X-Ray CT was used to photograph and measure the spacing between the separator and the electrode plate.

3. Test of mass ratio of gel electrolyte to electrolytic solution

The bare cell was put back and centrifuged to obtain a free liquid electrolytic solution inside the bare cell. The free liquid electrolytic solution and the remaining electrolytic solution were combined in the housing, and were weighed to obtain a weight of the liquid electrolytic solution. The gel electrolyte on the bare cell was scraped off and weighed. A TG-MS thermogravimetric analyzer was used to assist in calibrating a mass of the gel electrolyte that cannot be scraped off.

4. Test of equilibrium swelling ratio of high liquid-absorbent polymer

A dried polymer sample was weighed to obtain a dry weight Wd of the polymer.
The polymer sample was soaked in the electrolytic solution at room temperature for 24 h, and taken out from the electrolytic solution. The electrolytic solution on the surface was wiped off with filter paper. The sample was weighed to obtain a weight Ws of the polymer reaching swelling equilibrium. The electrolytic solution included a solvent and a lithium salt. The solvent was a mixed solvent of EC, EMC, and DEC in a volume ratio of 20:20:60. The lithium salt was $LiPF_6$ with a concentration of 1 mol/L.
The equilibrium swelling ratio of the polymer was calculated according to the following formula: Q=Ws/Wd.

5. Test of gravimetric energy density (GED)

The cell was weighed and recorded as M.
At 25°C, the cell was charged at a constant current of 1/3C rate to 4.25 V; charged at a constant voltage until the current dropped to 0.05C rate; then discharged at a constant current of 1/3C rate to 2.5 V. A discharge energy value ED was recorded.
Herein, GED=ED/M, and a unit is Wh/kg.
Parameters and performance test data of the secondary batteries of the above examples and comparative examples are shown in Table 1, Table 2, and Table 3 below.

**Table 1**

| Item | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Positive electrode plate | Ternary material X value | 0.92 | 0.9 | 0.92 | 0.92 | 0.92 | 0.92 | 0.92 | 0.92 | 0.92 | 0.92 |
| | Active material coating weight ($mg/cm^2$) | 30 | 30.5 | 25 | 35 | 40 | 30 | 30 | 30 | 30 | 30 |
| | Compacted density ($g/cm^3$) | 3.5 | 3.5 | 3.5 | 3.5 | 3.5 | 3.7 | 3.8 | 3.5 | 3.5 | 3.5 |
| | Polymer coating weight ($mg/cm^2$) | / | / | / | / | / | / | / | / | / | / |
| | Polymer equilibrium swelling ratio | / | / | / | / | / | / | / | / | / | / |
| Negative electrode plate | Silicon-based material amount (%) | 40 | 40 | 40 | 40 | 40 | 40 | 40 | 40 | 40 | 40 |
| | Active material coating weight ($mg/cm^2$) | 9 | 9 | 7.5 | 10.5 | 12 | 9 | 9 | 13 | 9 | 9 |
| | Compacted density ($g/cm^3$) | 1.7 | 1.7 | 1.7 | 1.7 | 1.7 | 1.7 | 1.7 | 1.7 | 1.6 | 1.8 |
| | Polymer coating weight ($mg/cm^2$) | / | / | / | / | / | / | / | / | / | / |
| | Polymer equilibrium swelling ratio | / | / | / | / | / | / | / | / | / | / |
| Electrolyte | Electrolyte amount (g/Ah) | 1.3 | 1.3 | 1.3 | 1.3 | 1.3 | 1.3 | 1.3 | 1.3 | 1.3 | 1.3 |
| | Electrolytic solution outside bare cell (g/Ah) | 0.05 | 0.05 | 0.05 | 0.05 | 0.05 | 0.05 | 0.05 | 0.05 | 0.05 | 0.05 |
| | Mass ratio of gel electrolyte to electrolytic solution | 1:0.11 | 1:0.11 | 1:0.11 | 1:0.11 | 1:0.11 | 1:0.11 | 1:0.11 | 1:0.11 | 1:0.11 | 1:0.11 |

(continued)

| | Item | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Separator | Polymer coating weight (mg/cm$^2$) | / | / | / | / | / | / | / | / | / | / |
| | Polymer equilibrium swelling ratio | / | / | / | / | / | / | / | / | / | / |
| | Spacing with positive electrode (µm) | 10 | 10 | 10 | 10 | 10 | 10 | 10 | 10 | 10 | 10 |
| | Spacing with negative electrode (µm) | 10 | 10 | 10 | 10 | 10 | 10 | 10 | 10 | 10 | 10 |
| Secondary battery | Energy density (Wh/kg) | 410 | 407 | 400 | 417 | 408 | 414 | 409 | 402 | 405 | 412 |

**Table 2**

| | Item | Example 11 | Example 12 | Example 13 | Example 14 | Example 15 | Example 16 | Example 17 | Example 18 | Example 19 | Example 20 |
|---|---|---|---|---|---|---|---|---|---|---|---|
| Positive electrode plate | Ternary material X value | 0.92 | 0.92 | 0.92 | 0.92 | 0.92 | 0.92 | 0.92 | 0.92 | 0.92 | 0.92 |
| | Active material coating weight $(mg/cm^2)$ | 30 | 30 | 30 | 30 | 30 | 30 | 30 | 30 | 30 | 30 |
| | Compacted density $(g/cm^3)$ | 3.5 | 3.5 | 3.5 | 3.5 | 3.5 | 3.5 | 3.5 | 3.5 | 3.5 | 3.5 |
| | Polymer coating weight $(mg/cm^2)$ | / | / | / | 0.5 | / | / | / | / | / | / |
| | Polymer equilibrium swelling ratio | / | / | / | 200% | / | / | / | / | / | / |
| Negative electrode plate | Silicon-based material amount (%) | 40 | 40 | 40 | 40 | 40 | 40 | 40 | 40 | 40 | 40 |
| | Active material coating weight $(mg/cm^2)$ | 9 | 9 | 9 | 9 | 9 | 9 | 9 | 9 | 9 | 9 |
| | Compacted density $(g/cm^3)$ | 1.7 | 1.7 | 1.7 | 1.7 | 1.7 | 1.7 | 1.7 | 1.7 | 1.7 | 1.7 |
| | Polymer coating weight $(mg/cm^2)$ | / | / | / | 0.5 | / | / | / | / | / | / |
| | Polymer equilibrium swelling ratio | / | / | / | 200% | / | / | / | / | / | / |
| Electrolyte | Electrolyte amount (g/Ah) | 0.9 | 1.4 | 1.35 | 1.3 | 1.3 | 1.3 | 1.3 | 1.3 | 1.3 | 1.3 |
| | Electrolytic solution outside bare cell (g/Ah) | 0.05 | 0.05 | 0.1 | 0.01 | 0.03 | 0.03 | 0.02 | 0.01 | 0.01 | 0.1 |
| | Mass ratio of gel electrolyte to electrolytic solution | 1:0.11 | 1:0.11 | 1:0.11 | 1:0.11 | 1:0.11 | 1:0.11 | 1:0.11 | 1:0.11 | 1:0.11 | 1:0.25 |

(continued)

| | Item | Example 11 | Example 12 | Example 13 | Example 14 | Example 15 | Example 16 | Example 17 | Example 18 | Example 19 | Example 20 |
|---|---|---|---|---|---|---|---|---|---|---|---|
| Separator | Polymer coating weight (mg/cm²) | / | / | / | / | / | / | 0.5 | 1 | 1.4 | / |
| | Polymer equilibrium swelling ratio | / | / | / | / | / | / | 200% | 200% | 200% | / |
| | Spacing with positive electrode (μm) | 10 | 10 | 10 | 10 | 20 | 10 | 10 | 10 | 10 | 10 |
| | Spacing with negative electrode (μm) | 10 | 10 | 10 | 10 | 10 | 20 | 10 | 10 | 10 | 10 |
| Secondary battery | Energy density (Wh/kg) | 432 | 404 | 407 | 412 | 411 | 411 | 411 | 412 | 410 | 408 |

**Table 3**

| Item | | Comparative example 1 | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|
| Positive electrode plate | Ternary material X value | 0.8 | 0.92 | 0.92 | 0.92 | 0.92 | 0.92 | 0.92 | 0.92 | 0.92 |
| | Active material coating weight ($mg/cm^2$) | 33 | 15 | 30 | 30 | 30 | 30 | 30 | 30 | 30 |
| | Compacted density ($g/cm^3$) | 3.5 | 3.5 | 3.1 | 3.5 | 3.5 | 3.5 | 3.5 | 3.5 | 3.5 |
| | Polymer coating weight ($mg/cm^2$) | / | / | / | / | / | / | / | / | / |
| | Polymer equilibrium swelling ratio | / | / | / | / | / | / | / | / | / |

(continued)

| Item | | Comparative example 1 | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|
| Negative electrode plate | Silicon-based material amount (%) | 40 | 40 | 40 | 5 | 40 | 40 | 40 | 40 | 40 |
| | Active material coating weight (mg/cm$^2$) | 9 | 4.5 | 9 | 18.6 | 15 | 9 | 9 | 9 | 9 |
| | Compacted density (g/cm$^3$) | 1.7 | 1.7 | 1.7 | 1.7 | 1.7 | 1.0 | 1.7 | 1.7 | 1.7 |
| | Polymer coating weight (mg/cm$^2$) | — | — | — | — | — | — | — | — | — |
| | Polymer equilibrium swelling ratio | — | — | — | — | — | — | — | — | — |
| Electrolyte | Electrolyte amount (g/Ah) | 1.3 | 1.3 | 1.3 | 1.3 | 1.3 | 1.3 | 1.6 | 1.3 | 1.3 |
| | Electrolytic solution outside bare cell (g/Ah) | 0.05 | 0.05 | 0.05 | 0.05 | 0.05 | 0.05 | 0.05 | 0.2 | 0.05 |
| | Mass ratio of gel electrolyte to electrolytic solution | 1:0.11 | 1:0.11 | 1:0.11 | 1:0.11 | 1:0.11 | 1:0.11 | 1:0.11 | 1:0.11 | 1:0 |

(continued)

| Item | | Comparative example 1 | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|
| Separator | Polymer coating weight (mg/cm²) | / | / | / | / | / | / | / | / | / |
| | Polymer equilibrium swelling ratio | / | / | / | / | / | / | / | / | / |
| | Spacing with positive electrode (μm) | 10 | 10 | 10 | 10 | 10 | 10 | 10 | 10 | 10 |
| | Spacing with negative electrode (μm) | 10 | 10 | 10 | 10 | 10 | 10 | 10 | 10 | 10 |
| Secondary battery | Energy density (Wh/kg) | 367 | 377 | 385 | 340 | 394 | 379 | 390 | 395 | 392 |

From the data in the tables, the following can be learned.

From Comparative example 1 and Examples 1 and 2, it can be learned that a higher Ni amount in the positive electrode material is helpful to achieve a higher energy density.

From Comparative example 2 and Examples 1 and 3 to 5, it can be learned that when the coating weight is below 35 mg/cm$^2$, a larger coating weight results in a greater proportion of the active material relative to a total weight of the cell, leading to a higher gravimetric energy density; however, when the coating weight further increases, a diffusion impedance of a thick electrode deteriorates significantly, causing capacity performance loss in the cell, resulting in a decrease rather than an increase in the gravimetric energy density.

From Comparative example 3 and Examples 6 and 7, it can be learned that a higher compacted density of the positive electrode allows more layers of active material to be filled within the same housing, improving the gravimetric energy density of the cell. However, an excessively high compacted density damages a structure of active material particles, leading to capacity loss. Thus, the compacted density should not be excessively high.

From Comparative example 4, it can be learned that a reduced mass proportion of the silicon-based material in the negative electrode leads to a decrease in the gravimetric energy density. From Comparative example 5 and Example 8, it can be learned that under the same positive electrode coating weight, if a coating weight of the negative electrode is excessively low, lithium precipitation occurs in the negative electrode, resulting in capacity loss; and when the coating weight of the negative electrode is excessively high, a large amount of ineffective negative electrode active material reduces the gravimetric energy density. Thus, the coating weight of the negative electrode needs to be within an appropriate range.

From Comparative example 6 and Examples 9 and 10, it can be learned that a higher compacted density of the negative electrode improves the gravimetric energy density of the cell; however, an excessively high compacted density damages a structure of active material particles, leading to capacity loss. Thus, the compacted density of the negative electrode should not be excessively high and needs to be within an appropriate range.

From Comparative example 7 and Examples 11 and 12, it can be learned that a higher total mass of the electrolyte in the cell results in more free electrolytic solution outside the bare cell. This is not helpful to improve capacity performance and reduces the gravimetric energy density. A lower total mass of the electrolyte increases the gravimetric energy density, but an excessively low mass of the electrolyte leads to capacity performance loss. Therefore, the electrolyte mass also needs to be controlled within a range specified by the claims.

From Comparative example 8 and Examples 1 and 13, it can be learned that under the same total mass of the electrolyte, a higher amount of free electrolytic solution outside the bare cell is less favorable to normal capacity performance of the cell, resulting in loss of the gravimetric energy density of the cell.

From Examples 1, 14, and 17 to 19, it can be learned that applying a high liquid-absorbent polymer on the surfaces of the positive electrode and negative electrode or the surface of the separator can reduce a free electrolytic solution outside the bare cell under the same mass of the electrolyte, thereby reducing capacity loss and facilitating achievement of a higher gravimetric energy density.

From Examples 1, 15, and 16, it can be learned that appropriately adjusting a gap between the positive electrode plate and negative electrode plate and the separator can also reduce the free electrolytic solution on the outside, achieving a higher gravimetric energy density.

From Comparative example 9 and Examples 1 and 20, a gel electrolyte combined with an appropriate amount of a liquid electrolytic solution can improve electrode wetting and capacity performance, achieving a higher gravimetric energy density; however, under the same total amount of the electrolyte, a higher proportion of the liquid electrolytic solution results in more free ineffective electrolytic solution outside the bare cell. This is unfavorable to capacity performance.

It should be noted that this application is not limited to the foregoing embodiments. The above embodiments are merely examples, and any embodiment having substantially the same configuration and achieving the same effect as the technical idea within the scope of the technical solution of this application is included within the technical scope of this application. Furthermore, without departing from the essence of this application, various modifications figured out by persons skilled in the art to some embodiments and other configurations constructed by combining some constituent elements from some embodiments are also included within the scope of this application.

**Claims**

**1.** A secondary battery, comprising:

a positive electrode plate, wherein the positive electrode plate has a positive electrode active material, the positive electrode active material comprises $Li_aNi_xCo_yM_zO_2$, wherein $0.2 \leq a \leq 1.2$, $0.85 \leq x \leq 1$, $0 \leq y < 0.15$, and $x+y+z=1$, and M comprises one or more of Mn and Al; and a coating weight of the positive electrode active material is 19 mg/cm$^2$ to 45 mg/cm$^2$, and a compacted density of the positive electrode plate is 3.2 g/cm$^3$ to 3.8 g/cm$^3$;

a negative electrode plate, wherein the negative electrode plate has a negative electrode active material, wherein a mass percentage of a silicon-based material in the negative electrode active material is 20% to 100%, a coating weight of the negative electrode active material is 5 mg/cm$^2$ to 13 mg/cm$^2$, and a compacted density of the negative electrode plate is 1.1 g/cm$^3$ to 1.9 g/cm$^3$; and

an electrolyte, wherein an amount of the electrolyte in the secondary battery is 0.8 g/Ah to 1.5 g/Ah, the electrolyte comprises an electrolytic solution, and an amount of the electrolytic solution outside a bare cell in the secondary battery is less than or equal to 0.1 g/Ah.

2. The secondary battery according to claim 1, **characterized in that** a separator is disposed between the positive electrode plate and the negative electrode plate, a surface of the separator is provided with a first high liquid-absorbent polymer layer, and an equilibrium swelling ratio of a high liquid-absorbent polymer in the first high liquid-absorbent polymer layer is 150% to 300%.

3. The secondary battery according to claim 1 or 2, **characterized in that** a surface of the positive electrode plate and/or the negative electrode plate is provided with a second high liquid-absorbent polymer layer, and an equilibrium swelling ratio of a high liquid-absorbent polymer in the second high liquid-absorbent polymer layer is 150% to 300%.

4. The secondary battery according to claim 2 or 3, **characterized in that** a coating weight of the high liquid-absorbent polymer is 0.1 mg/cm$^2$ to 1.4 mg/cm$^2$; and
optionally, the coating weight of the high liquid-absorbent polymer is 0.1 mg/cm$^2$ to 1.0 mg/cm$^2$.

5. The secondary battery according to any one of claims 2 to 4, **characterized in that** the high liquid-absorbent polymer comprises one or more of a polyacrylate electrolyte, a polyether electrolyte, a polycarbonate electrolyte, a polycarboxylate electrolyte, a silicon-based electrolyte, a polythiol electrolyte, a maleic anhydride electrolyte, and a polysulfate electrolyte.

6. The secondary battery according to any one of claims 1 to 5, **characterized in that** the electrolyte further comprises a gel electrolyte, and a mass ratio of the gel electrolyte to the electrolytic solution is 1:(0.05 to 0.4); and
optionally, the mass ratio of the gel electrolyte to the electrolytic solution is 1:(0.05 to 0.25).

7. The secondary battery according to claim 6, **characterized in that** a monomer forming the gel electrolyte comprises one or more of methyl methacrylate, methyl acrylate, ethyl methacrylate, ethyl acrylate, n-butyl methacrylate, butyl acrylate, n-octyl methacrylate, n-octyl acrylate, vinyl acetate, vinylene carbonate, vinyl ethylene carbonate, triethylene glycol dimethacrylate, diethylene glycol dimethacrylate, ethylene glycol dimethacrylate, allyl methacrylate, divinylbenzene, polyvinyl alcohol, and styrene.

8. The secondary battery according to claim 6 or 7, **characterized in that** an initiator forming the gel electrolyte comprises one or more of a persulfate, an azo initiator, and an organic peroxide initiator.

9. The secondary battery according to any one of claims 1 to 8, **characterized in that** the coating weight of the positive electrode active material is 25 mg/cm$^2$ to 35 mg/cm$^2$.

10. The secondary battery according to any one of claims 1 to 9, **characterized in that** the compacted density of the positive electrode plate is 3.5 g/cm$^3$ to 3.7 g/cm$^3$.

11. The secondary battery according to any one of claims 1 to 10, **characterized in that** the coating weight of the negative electrode active material is 7 mg/cm$^2$ to 10.5 mg/cm$^2$.

12. The secondary battery according to any one of claims 1 to 11, **characterized in that** a compacted density of the negative electrode plate is 1.6 g/cm$^3$ to 1.8 g/cm$^3$.

13. The secondary battery according to any one of claims 1 to 12, **characterized in that** the amount of the electrolyte in the secondary battery is 0.9 g/Ah to 1.4 g/Ah.

14. The secondary battery according to any one of claims 1 to 13, **characterized in that** a mass percentage of the silicon-based material in the negative electrode active material is 40% to 100%.

**15.** An electric apparatus, comprising the secondary battery according to any one of claims 1 to 14.

FIG. 1

FIG. 2

FIG. 3

## INTERNATIONAL SEARCH REPORT

| International application No. |
| --- |
| **PCT/CN2023/093164** |

| A. | CLASSIFICATION OF SUBJECT MATTER |
| --- | --- |

H01M10/058(2010.01)i;  H01M4/139(2010.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNBABS; CNTXT; DWPI; SIPOABS; USTXT; CNKI; IEEE: 正极, 高镍, 锂镍氧化物, Al, Co. Li, Mn, Ni, 压实密度, 涂布, 质量, 重量, 负极, 硅, 硅基, 电解质, 电解液, 电芯, 电芯外, 裸电芯, 裸芯, 游离, 能量密度, 吸液, 保液, 平衡溶胀, g/Ah, anode, positive, active material+, lithium, nickel, cobalt, manganese, oxide, negative, cathode, silicon based, compacted density, coat+, weight, electrolyte, core?, bare, free, energy density, liquid suction, liquid retention, swell+, balanc+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 106602131 A (NINGDE AMPEREX TECHNOLOGY LTD.) 26 April 2017 (2017-04-26) description, paragraphs 12-29 | 1-15 |
| A | CN 109546115 A (ANHUI ANKAI AUTOMOBILE CO., LTD.) 29 March 2019 (2019-03-29) entire document | 1-15 |
| A | CN 111052488 A (LG CHEM, LTD.) 21 April 2020 (2020-04-21) entire document | 1-15 |
| A | CN 112018438 A (SVOLT ENERGY TECHNOLOGY CO., LTD.) 01 December 2020 (2020-12-01) entire document | 1-15 |
| A | JP 2016072119 A (HITACHI MAXELL, LTD.) 09 May 2016 (2016-05-09) entire document | 1-15 |
| A | WO 2023004819 A1 (CONTEMPORARY AMPEREX TECHNOLOGY CO., LTD.) 02 February 2023 (2023-02-02) description, paragraphs 3-38 | 1-15 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 December 2023** | **21 December 2023** |

| Name and mailing address of the ISA/CN | Authorized officer |
| --- | --- |
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/093164** |

| Patent document cited in search report | | | Publication date (day/month/year) | Patent family member(s) | | | Publication date (day/month/year) |
| --- | --- | --- | --- | --- | --- | --- | --- |
| CN | 106602131 | A | 26 April 2017 | CN | 111416145 | A | 14 July 2020 |
| | | | | CN | 111416145 | B | 25 February 2022 |
| CN | 109546115 | A | 29 March 2019 | | None | | |
| CN | 111052488 | A | 21 April 2020 | KR | 20190092283 | A | 07 August 2019 |
| | | | | KR | 102301670 | B1 | 14 September 2021 |
| | | | | US | 2021075011 | A1 | 11 March 2021 |
| | | | | US | 11476459 | B2 | 18 October 2022 |
| | | | | PL | 3651254 | T3 | 24 January 2022 |
| | | | | JP | 2021501450 | A | 14 January 2021 |
| | | | | JP | 7038967 | B2 | 22 March 2022 |
| | | | | EP | 3651254 | A1 | 13 May 2020 |
| | | | | EP | 3651254 | A4 | 27 January 2021 |
| | | | | EP | 3651254 | B1 | 20 October 2021 |
| | | | | WO | 2019151724 | A1 | 08 August 2019 |
| | | | | IN | 202017023705 | A | 11 September 2020 |
| | | | | IN | 400278 | B | 01 July 2022 |
| | | | | CN | 111052488 | B | 28 March 2023 |
| CN | 112018438 | A | 01 December 2020 | CN | 112018438 | B | 04 March 2022 |
| | | | | WO | 2022041702 | A1 | 03 March 2022 |
| | | | | EP | 4106069 | A1 | 21 December 2022 |
| | | | | KR | 20230028455 | A | 28 February 2023 |
| | | | | IN | 202327005185 | A | 14 April 2023 |
| | | | | JP | 2023530380 | W | 18 July 2023 |
| JP | 2016072119 | A | 09 May 2016 | | None | | |
| WO | 2023004819 | A1 | 02 February 2023 | JP | 2023538720 | A | 11 September 2023 |
| | | | | KR | 20230021096 | A | 13 February 2023 |

Form PCT/ISA/210 (patent family annex) (July 2022)